# FASCICULE DE BREVET EUROPEEN

(11) **EP 0 831 070 B1**
(45) Date de publication et mention de la délivrance du brevet: **03.11.1999**
(21) Numéro de dépôt: 97402196.6
(22) Date de dépôt: 22.09.1997
(51) Int. Cl.: C03B 37/014, C03B 37/012

(54) **Procédé de fabrication d'une préforme pour fibre optique**
Verfahren zum Herstellen einer Vorform für optische Faser
Process for manufacturing an optical fibre preform

(30) Priorité: 24.09.1996 FR 9611596
(43) Date de publication de la demande: 25.03.1998
(73) Titulaire: ALCATEL, 75008 Paris (FR)
(72) Inventeur: Campion, Jean-Florent, 92270 Bois Colombes (FR); Goudeau, Jacques, 91600 Savigny Sur Orge (FR); Jameron, Hélène, 78570 Andresy (FR)
(74) Mandataire: Feray, Valérie

(56) Documents cités:
- EP-A- 0 216 338
- EP-A- 0 658 520
- EP-A- 0 719 738
- EP-A- 0 727 392
- FR-A- 2 446 264
- FR-A- 2 589 461
- US-A- 4 402 720
- US-A- 5 000 771

## Description

L'invention concerne un procédé de fabrication d'une préforme pour fibre optique fabriquée dans une installation de fabrication ou de recharge de préformes à âme support, l'installation comprenant des moyens de rotation d'axe de rotation horizontal ayant deux points de montage entre lesquels est montée l'âme support de la préforme à fabriquer ou à recharger, des moyens de torche à plasma et d'apport de matière disposés radialement à ladite âme support et ayant un mouvement relatif de translation axiale parallèle à l'âme support pour la réalisation de la préforme autour de ladite âme support. La préforme est fabriquée ou rechargée par passes successives de la torche à plasma avec apport de matière.

Au cours de l'étape ci-dessus, il se forme des suies relatives à une partie de l'apport de matière non agrégée à la préforme. D'une manière connue, les installations sont équipées de hotte aspirante destinée à aspirer ces suies pour éviter qu'elles ne se déposent sur la préforme.

L'étape de fabrication ou de recharge est suivie d'une étape de séparation dans laquelle la préforme est coupée transversalement à l'une de ses extrémités, pour être déposée de l'installation.

Durant cette étape de séparation, on élève la température de la zone de séparation de la préforme à l'aide de la torche plasma ou d'un chalumeau pour rendre ductile la zone de séparation, puis on étire la zone de séparation ductile jusqu'à la séparation effective de la préforme de son embout.

Outre les suies formées par la matière non agrégée à la préforme, lors des étapes de séparation et de fabrication ou recharge, la surface périphérique de la préforme est chauffée par la torche à plasma à une température telle qu'il existe à proximité de cette surface un phénomène d'évaporation/condensation de la matière constitutive de la préforme. La matière se vaporise, puis en s'élevant elle refroidit et se condense, formant des suies retombant sur la préforme.

Ainsi, lors de la dernière passe de l'étape de fabrication ou de recharge, ce phénomène génère des suies qui une fois déposées sur la préforme diminuent sensiblement la qualité de l'état de surface de la préforme. Cela se traduit par une augmentation de la rugosité, et affecte la transparence de la préforme.

De même, lors de l'étape de séparation, le chauffage de la zone de séparation entraîne un dépôt de suies aux environs de la zone de séparation.

Pour remédier à ces inconvénients, on opère une étape supplémentaire de vitrification de la préforme à l'aide d'un chalumeau. Cette étape supplémentaire affecte sensiblement le temps de fabrication d'une préforme. En effet, cette étape nécessite un refroidissement suffisant de la préforme pour qu'un opérateur puisse venir réaliser la vitrification de la surface avec le chalumeau. Toute diminution de cette phase de refroidissement augmente considérablement les risques d'accident pour l'opérateur. Cependant la réchauffe locale d'une préforme refroidie, lors de l'étape de vitrification de la surface, peut avoir des conséquences importantes sur la préforme dans la zone réchauffée. Il peut notamment s'y produire des fissures. Il faut donc trouver un compromis qualité/sécurité du fait de la présence humaine lors de la phase de vitrification.

Selon un procédé décrit dans le document FR-A-2 730 505, au nom de la demanderesse, à l'issue des passes de la torche à plasma avec apport de matière et/ou à l'issue de la séparation de la préforme, on effectue automatiquement et sans refroidissement de la préforme au moins une passe de glaçage avec une torche à plasma sans apport de matière pour vitrifier des dépôts comprenant de suies de condensation.

Ce glaçage, ou polissage thermique, permet d'éliminer les imperfections (tels que les grains mal fondus).

Afin d'éviter les redépôts de suies pendant ce glaçage (les redépôts de silices sont susceptibles de polluer le four de fibrage), on devrait théoriquement adopter une vitesse de glaçage élevée, de l'ordre de 80 à 100 mm/min. Mais cette vitesse de glaçage entraîne des contraintes inacceptables dans la préforme, en raison d'une température insuffisante dans celle-ci pour relaxer les contraintes. Il en résulterait des risques élevés de fissure ou de cassure qui diminuent la durée de vie.

Aussi, le glaçage est-il généralement effectué à une vitesse moyenne de 40 mm/min résultant d'un compromis entre ces différentes exigences.

Néanmoins, le procédé de l'art antérieur, quoique globalement satisfaisant, laisse subsister des risques de redépôt, notamment lors de la phase de séparation de la préforme.

L'invention a pour but d'améliorer encore le procédé connu.

L'invention a pour objet un procédé de fabrication d'une préforme dans une installation de fabrication ou de recharge de préforme à âme support, ladite installation comprenant au moins des moyens de rotation d'axe de rotation horizontal ayant deux points de montage entre lesquels est montée l'âme support de la préforme à fabriquer ou à recharger, des moyens de torche à plasma et d'apport de matière disposés radialement à ladite âme support et ayant un mouvement relatif de translation axiale parallèle à l'âme support pour la réalisation de ladite préforme autour de ladite âme support, ladite préforme étant fabriquée ou rechargée par passes successives de la torche à plasma avec apport de matière, et comprenant à l'issue des passes de la torche à plasma avec apport de matière au moins une étape de glaçage dans laquelle on effectue automatiquement et sans refroidissement de la préforme au moins une passe avec une torche à plasma sans apport de matière pour vitrifier des dépôts comprenant des suies de condensation,
caractérisé par
a) une première étape de glaçage à vitesse lente d'une première extrémité de la préforme à la seconde extrémité,
b) une pré-séparation de la préforme du côté de la première extrémité,
c) une deuxième étape de glaçage de la première extrémité à la seconde extrémité de la préforme,
d) la séparation complète de la préforme à l'endroit de la pré-séparation.

La vitesse lente de glaçage de la première étape est de l'ordre de 20 à 25 mm/min. La première et/ou la seconde étape de glaçage sont de préférence réalisées à la torche à plasma.

Avantageusement, lors de la pré-séparation, le diamètre de la préforme est sensiblement réduit à celui de l'âme support.

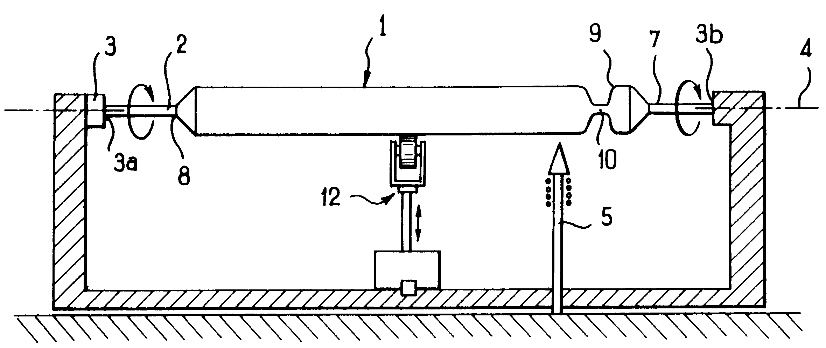

D'autres avantages et caractéristiques de la présente invention résulteront de la description qui va suivre en référence au dessin annexé dans lequel la figure unique est la représentation schématique d'une préforme en cours de fabrication de surface selon le procédé de l'invention.

Le procédé selon l'invention est destiné à être mis en oeuvre sur une installation de fabrication ou de recharge d'une préforme 1 ayant une âme centrale support 2, connue de l'art antérieur. De façon connue, cette installation comprend au moins des moyens de rotation 3 d'axe de rotation horizontal 4 sur lesquels est montée l'âme support 2 de la préforme 1 à fabriquer ou à recharger, et des moyens de torche à plasma 5 et d'apport de matière disposés radialement à ladite âme support 2. De façon connue, l'installation permet un mouvement relatif de translation axiale des moyens de torche à plasma 5 et d'apport de matière parallèle à l'âme support 2 pour la réalisation de la préforme 1 autour de l'âme support 2.

Dans la forme de réalisation représentée sur les figures, les moyens de rotation 3 sont embarqués sur un châssis mobile en translation parallèlement à l'axe de rotation 4, les moyens de torche à plasma 5 et d'apport de matière étant ixes.

La préforme en cours de fabrication ou de recharge est translatée en même temps que le châssis auquel elle est attachée en deux points d'appui qui sont les points de montage 3a, 3b de l'âme support 2 sur les moyens de rotation 3.

La fabrication de la préforme comprend une pluralité de passes de la préforme en regard des moyens de torche à plasma et d'apport de matière.

Avantageusement, l'installation comporte des moyens de soutien commandés 12 disposés entre les points de montage 3a, 3b et constituant des points d'appui complémentaires de la préforme 1. Ainsi, si l'on choisit judicieusement l'emplacement des moyens de soutien commandés, on peut diminuer la flèche due à la masse de la préforme en cours de fabrication ou en cours de recharge.

Les moyens de soutien commandés et leur fonctionnement sont décrits dans le document FR-A-2 726 547, au nom de la demanderesse.

A l'issue des passes de fabrication ou de recharge de la préforme il subsiste des dépôts de suies dus au phénomène d'évaporation/condensation, sur la préforme 1 elle-même et sur les parties de l'âme support 2 qui n'ont pas été soumises aux passes de fabrication ou de recharge.

On réalise automatiquement et sans refroidissement de la préforme une première passe de glaçage avec la torche à plasma 5 sans apport de matière, de la première extrémité 7 à la seconde extrémité 8 de la préforme 1, à une vitesse lente comprise typiquement entre 20 et 25 mm/min.

Ensuite, on déplace le tour de verrier, sans chauffer la préforme, pour amener la torche 5 à l'endroit 9 prévu pour la séparation, à côté de la première extrémité 7.

On commence la séparation selon le procédé classique (chauffage puis étirage) et on l'arrête lorsque le diamètre en 9 s'est réduit de façon substantielle tout en laissant un tronçon de matière 10 suffisant pour soutenir la préforme. Le diamètre de tronçon 10 peut avantageusement être sensiblement la même que celui de l'âme support 2 au niveau des extrémités 7 et 8 (environ 30 mm par rapport aux 60 à 70 mm de la préforme initiale).

On repasse à nouveau la torche 5 sur la préforme 1, depuis la première extrémité 7 ou au moins depuis l'endroit de la séparation 9, pour éliminer la silice déposée lors de l'étape de pré-séparation (notamment au voisinage du tronçon 10) et lors de l'étape de glaçage précédente.

On ramène enfin la torche 5 à l'endroit 9 de la séparation pour rapidement terminer celle-ci.

La préforme obtenue est totalement transparente (pas de redépôt) et sans contraintes additionnelles. Son état de surface est impeccable.

Le procédé selon l'invention concerne généralement la recharge plasma d'une préforme, mais il peut aussi s'appliquer à la fabrication plasma d'une préforme.

## Revendications

1. Procédé de fabrication d'une préforme (1) dans une installation de fabrication ou de recharge de préforme (1) à âme support (2), ladite installation comprenant au moins des moyens de rotation (3) d'axe de rotation horizontal (4) ayant deux points de montage (3a, 3b) entre lesquels est montée l'âme support (2) de la préforme (1) à fabriquer ou à recharger, des moyens de torche à plasma (5) et d'apport de matière disposés radialement à ladite âme support (2) et ayant un mouvement relatif de translation axiale parallèle à l'âme support (2) pour la réalisation de ladite préforme (1) autour de ladite âme support (2), ladite préforme étant fabriquée ou rechargée par passes successives de la torche à plasma (5) avec apport de matière, et comprenant à l'issue des passes de la torche à plasma (5) avec apport de matière au moins une étape de glaçage dans laquelle on effectue automatiquement et sans refroidissement de la préforme (1) au moins une passe avec une torche à plasma (5) sans apport de matière pour vitrifier des dépôts comprenant des suies de condensation,
caractérisé par
a) une première étape de glaçage à vitesse lente d'une première extrémité (7) de la préforme (1) à la seconde extrémité (8),
b) une pré-séparation de la préforme (1) du côté de la première extrémité (7),
c) une deuxième étape de glaçage de la première extrémité (7) à la seconde extrémité (8) de la préforme,
d) la séparation complète de la préforme à l'endroit (9) de la pré-séparation.

2. Procédé selon la revendication 1, caractérisé en ce que la vitesse de glaçage de la première étape est de l'ordre de 20 à 25 mm/min.

3. Procédé selon la revendication 1 ou 2, caractérisé en ce que lors de la pré-séparation, le diamètre de la préforme est sensiblement réduit à celui de l'âme support (2).

4. Procédé selon l'une quelconque des revendications 1 à 3, caractérisé en ce que la première et/ou la seconde étape de glaçage sont réalisées à la torche à plasma (5).

## Claims

1. A method of manufacturing a preform (1) in an installation for manufacturing or building up preforms (1) having supporting cores (2), said installation including at least rotation means (3) having a horizontal axis of rotation (4) and two mounting points (3a, 3b) between which the supporting core (2) of the preform (1) to be manufactured or built up is mounted, plasma-torch and material-supply means (5) disposed radially relative to said supporting core (2) and mounted to move in axial translation relative to and parallel to the supporting core (2) so as to make said preform (1) around said supporting core (2), said preform being manufactured or built up by effecting successive passes with the plasma torch (5) while material is being supplied, said method including, after the plasma torch passes with material being supplied have been effected, at least one glazing step in which at least one pass is effected automatically and without cooling the preform (1), which pass is effected with a plasma torch (5) and without material being supplied so as vitrify deposits comprising condensation soot;
said method being characterized by:
a) a first glazing step effected at slow speed from a first end (7) of the preform (1) to the second end (8) thereof;
b) pre-separation of the preform (1) adjacent to the first end (7);
c) a second glazing step effected from the first end (7) to the second end (8) of the preform; and
d) complete separation of the preform at the place of pre-separation (9).

2. A method according to claim 1, characterized in that the glazing speed of the first step lies approximately in the range 20 mm/min to 25 mm/min.

3. A method according to claim 1 or 2, characterized in that, during pre-separation, the diameter of the preform is reduced to substantially that of the supporting core (2).

4. A method according to any one of claims 1 to 3, characterized in that the first glazing step and/or the second glazing step is/are effected with the plasma torch (5).

## Patentansprüche

1. Verfahren zum Herstellen einer Vorform (1) in einer Anlage zur Herstellung oder zum Beschichten einer Vorform (1) mit Trägerkern (2), wobei die Anlage wenigstens Mittel zum Drehen (3) mit horizontaler Rotationsachse (4) mit zwei Montagepunkten (3a, 3b), zwischen denen der Trägerkern (2) der herzustellenden oder zu beschichtenden Vorform montiert ist, und Plasmafackel-Mittel (5) zum Auftragen von Material, die radial zum Trägerkern (2) angeordnet sind und eine axiale Relativ-Translationsbewegung parallel zum Trägerkern (2) für die Ausbildung der Vorform (1) um den Trägerkern (2) herum haben, umfasst, wobei die Vorform hergestellt oder beschichtet wird durch aufeinanderfolgende Durchgänge der Plasmafackel (5) mit Materialauftrag, das im Anschluss an Durchgänge der Plasmafackel (5) mit Materialauftrag wenigstens einen Schritt des Glasierens umfasst, in dem automatisch und ohne Abkühlung der Vorform (1) wenigstens ein Durchgang mit einer Plasmafackel (5) ohne Materialauftrag durchgeführt wird, um Abscheidungen, die Kondensationsruß enthalten, zu verglasen, gekennzeichnet durch
a) einen ersten Schritt des Verglasens mit langsamer Geschwindigkeit von einem ersten Ende (7) der Vorform (1) zum zweiten Ende (8),
b) eine Vortrennung der Vorform (1) auf der Seite des ersten Endes (7),
c) einen zweiten Schritt des Verglasens vom ersten Ende (7) zum zweiten Ende (8) der Vorform,
d) die vollständige Abtrennung der Vorform am Ort (9) der Vortrennung.

2. Verfahren nach Anspruch 1, dadurch gekennzeichnet, dass die Verglasungsgeschwindigkeit des ersten Schrittes in der Größenordnung von 20-25 mm/min liegt.

3. Verfahren nach Anspruch 1 oder 2, dadurch gekennzeichnet, dass bei der Vortrennung der Durchmesser der Vorform im Wesentlichen auf den des Trägerkerns (2) verringert wird.

4. Verfahren nach einem der Ansprüche 1 bis 3, dadurch gekennzeichnet, dass der erste und/oder der zweite Verglasungsschritt mit der Plasmafackel (5) durchgeführt werden.
